# Europäisches Patentamt
# European Patent Office
# Office européen des brevets

(19)

(11) Veröffentlichungsnummer: **0 192 961**
**B1**

(12) **EUROPÄISCHE PATENTSCHRIFT**

(45) Veröffentlichungstag der Patentschrift:
22.03.89

(21) Anmeldenummer: 86100844.9

(22) Anmeldetag: 22.01.86

(51) Int. Cl.⁴: **C 08 L 27/06, C 08 L 23/00, C 08 L 33/00, C 08 K 3/00, C 08 K 5/00, F 16 L 9/16**

(54) Folie auf Basis von Vinylchloridpolymerisat und ihre Verwendung zur Herstellung steifer rohrförmiger Körper.

(30) Priorität: 01.02.85 DE 3503383

(43) Veröffentlichungstag der Anmeldung:
03.09.86 Patentblatt 86/36

(45) Bekanntmachung des Hinweises auf die Patenterteilung:
22.03.89 Patentblatt 89/12

(84) Benannte Vertragsstaaten:
DE FR GB IT NL SE

(56) Entgegenhaltungen:
DE-A- 1 650 135
DE-A- 3 231 906
FR-A- 2 107 500
US-A- 3 396 211
US-A- 3 936 417

CHEMICAL ABSTRACTS, Band 100, Nr. 14, April 1984,
Seite 42, Nr. 104481g, Columbus, Ohio, US

(73) Patentinhaber: HOECHST AKTIENGESELLSCHAFT,
Postfach 80 03 20, D-6230 Frankfurt am Main 80 (DE)

(72) Erfinder: Willems, Wilhelmus Johannes, Akker 24,
NL-6043 EG Heythuisen (NL)
Erfinder: Fransen, Theodorus Wilhelmus M., Willem II
straat 17, NL-6021 EA Budel (NL)

ACTORUM AG

### Beschreibung

Die Erfindung bezieht sich auf eine Folie auf Basis von Vinylchloridpolymerisat und Additiven und auf ihre Verwendung.

Es ist bekannt, Kunststoffrohre nach dem Rohrwickelverfahren zu fertigen. Hierbei wird eine flache Bahn spiralig und mit überlappenden Rändern gewickelt und die überlappenden Ränder miteinander verklebt. Diese Rohre zeigen jedoch eine relativ geringe Steifigkeit und neigen bereits bei geringer Druckbelastung zur Verformung.

Zur Erhöhung der Belastbarkeit von Kunststoffrohren, auf die ein innerer Überdruck ausgeübt wird, kann beispielsweise die Wanddicke entsprechend vergrößert werden. Wegen des damit verbundenen großen Materialaufwandes werden zur Erhöhung der Steifigkeit anstelle der Vollwandrohre allerdings Rohre mit profilierter Oberfläche vorgezogen.

Es sind auch spiralförmig gewickelte Rohre mit profilierter Außenfläche aus Polyvinylchlorid-Folie bekannt geworden, bei denen die sich überlappenden Ränder mit einem Schnappverschluß miteinander verbunden sind. Hierbei zeigt der eine Rand der Folie eine streifenförmige, in Längsrichtung sich erstreckende Erhebung und der andere Rand eine in Längsrichtung sich erstreckende Rille. Beim spiralförmigen Aufwickeln der Folie schnappt die Erhebung in die Rille des angrenzenden Folienrands und verbindet dadurch die aneinanderstoßenden Ränder.

Bei spiralförmig gewickelten Metallrohren erfolgt die Verbindung der sich überlappenden Ränder des Metallbandes in der Weise, daß man das Metallband entlang seiner Ränder nach oben bzw. nach unten in Richtung zur Bandmitte um 180° umbiegt und auf diese Weise einen Falz bildet. Beim spiralförmigen Aufwickeln werden die Ränder dann miteinander verhakt. Diese sogenannten spiralgefalzten Rohre zeigen zwar den Vorteil, daß sie bei vergleichsweise geringer Wandstärke des Metallbandes große Festigkeit aufweisen. Es ist bei dieser Formgebung gewöhnlich nicht erforderlich, ein profiliertes Metallband zu verwenden, da sich bereits durch die verhakten Ränder im Überlappungsbereich ein spiralförmiges Profil ausbildet. Die Rohre sind aber wegen ihres hohen Gewichts schwer zu handhaben und ihr Transport ist relativ aufwendig. Spiralgefalzte Kunststoffrohre, welche diese Nachteile überwinden könnten, sind aber bisher nicht bekannt geworden.

Aus der DE-A-3 125 376 (= CA-Patent 1 188 445) ist bereits eine Polyvinylchlorid-Formmasse zur Herstellung von Folien bekannt geworden, die hohe Schlagzähigkeit, gute Wetterbeständigkeit und UV-Stabilität zeigt. Diese Formmasse enthält als wesentliche Additive chloriertes Polyethylen, Polymethylmethacrylat und Weichmacher. Aus diesem Material hergestellte Folien sind jedoch aufgrund der Rückstellneigung der gefalzten Ränder zur Herstellung spiralgefalzter Rohre nicht geeignet.

Es sind auch flexible, durch eine Kreisringdüse extrudierte Polyvinylchlorid-Schläuche bekannt geworden, die sich aufwickeln lassen (US-A-3,936,417). Diese Folien enthalten als Additive ebenfalls chloriertes Polyethylen und Polymethylmethacrylat sowie – zur Erhöhung der Flexibilität des Schlauches beim Wickeln – gleichmäßig verteiltes anorganisches Füllstoffmaterial, vorzugsweise Zinnoxid- und Titandioxid-Partikel. Zusätzlich kann die Folie noch 1 bis 4% fein verteiltes Calciumcarbonat enthalten. Durch diesen Zusatz wird das Auswandern von Bleisalzen, die als Stabilisatoren wirken, verhindert und die Extrusion läßt sich längere Zeit ohne Unterbrechung durchführen.

Auch dieses Schlauchmaterial ist, abgesehen von seiner zu hohen Flexibilität und unzureichenden Wetterbeständigkeit, wegen seiner ausgeprägten Neigung, sich nach dem Umbiegen der Ränder zu einem Falz wieder in die Ausgangslage zurückzulegen, zur Herstellung von spiralgefalzten Rohren nicht brauchbar.

Das in den beiden Druckschriften beschriebene Material ergibt Folien mit hoher Elastizität und Rückstellfähigkeit. Deshalb erfolgt bei der Herstellung spiralgefalzter Rohre aus diesem Material eine Rückformung der umgebogenen Folienränder sowohl im Falzformer wie bei der Falznaht-Verpressung, sobald die Preßkraft aufgehoben wird. Infolgedessen lassen sich die Folienränder vor der Verpressung nicht einwandfrei ineinander schließen und der Falz öffnet sich nach der Verpressung wieder.

Es ist somit Aufgabe der Erfindung, eine Kunststoffolie zu finden, die sich auf den bisherigen Vorrichtungen zur Herstellung dieser spiralgefalzten Metallrohre verarbeiten läßt und die geeignet ist, sich zu spiralförmig gewickelten Rohren mit umgebogenen, gefalzten und miteinander dauerhaft verhakten Rändern formen zu lassen. Die Folie soll außerdem für den Außeneinsatz gute Witterungsstabilität und ausreichende Schlagzähigkeit auch bei Temperaturen unterhalb von 0 °C besitzen.

Diese Aufgabe wird gelöst durch die Folie mit den in Anspruch 1 genannten Merkmalen und durch die in Anspruch 6 angegebene Verwendung. Die abhängigen Ansprüche geben bevorzugte Ausführungsformen der Folie bzw. der Verwendung an.

Einen wesentlichen Anteil an der Lösung der Aufgabe haben die anorganischen Partikel, welche im Gegensatz zu dem zitierten Stand der Technik in wesentlich höherer Konzentration eingesetzt werden. Es wurde gefunden, daß durch diese Additive in der hohen Konzentration der elastische Anteil der Folie soweit verringert werden kann, daß ihre umgebogenen, gefalzten Ränder ihre Verformung nach Aufhebung der Preßkraft wesentlich besser beibehalten und sich im geringen Maß zurückbiegen. Bei einem Anteil von kleiner als 8 Gew.-% zeigen die Partikel noch keine nennenswerte Auswirkung auf das Rückstellvermögen der Folie, bei Werten über 40 Gew.-% läßt sich die Folie nicht mehr verarbeiten. Die bevorzugte Menge an anorganischen Partikeln beträgt 10 bis 25 Gew.-%, bezogen auf das Foliengewicht.

Die anorganischen Teilchen bestehen aus Sulfaten, insbesondere Bariumsulfat, Silikaten, insbesondere Magnesiumaluminiumsilikat (Talkum), Kaliumaluminiumsilikat (Kaolin), Glaskugeln oder Glasfasern, und Carbonaten, insbesondere aber aus Calciumcarbonat. In besonders bevorzugter Ausführungsform bestehen die anorganischen Teilchen aus einer Mischung von 10 bis 20 Gew.-% Calciumcarbonat- und 0,5 bis 2 Gew.-% Titandioxid-Teilchen. Der mittlere Teilchendurchmesser liegt gewöhnlich im Bereich von 9,5 bis 5 µm.

Das die Hauptkomponente der Folie bildende Polyvinylchlorid hat vorzugsweise einen niedrigen K-Wert (DIN 53 726). Vorzugsweise liegt dieser Wert im Bereich von 50 bis 65. Es lassen sich Homopolymere, aber auch Vinylchlorid-Einheiten enthaltende Copolymere mit mindestens 85 Gew.-% Vinylchlorid-Anteil oder Vinylchlorid-Pfropfpolymerisat oder Mischungen aus diesen Polymeren verwenden.

Das erfindungsgemäß einzusetzende chlorierte Polyethylen ist ein Chlorierungsprodukt von Polyethylen und/oder von Mischpolymerisaten des Ethylens mit geringen Anteilen, vorzugsweise mit höchstens 1 bis 5 Mol-% Propen oder Buten-(1). Das Ethylenpolymerisat, das chloriert ist, kann im Niederdruck- oder Hochdruckverfahren hergestellt worden sein. Chloriertes Niederdruck-Polyethylen ist bevorzugt. Das mittlere Molekulargewicht des chlorierten Polyethylens beträgt zweckmäßigerweise etwa 30000 bis etwa 300000, vorzugsweise etwa 40000 bis 100 000 (berechnet aus dem Chlorgehalt und dem gelchromatographisch bestimmten Molekulargewicht des Ausgangspolyethylens (vgl. Zeitschrift «Makromolekulare Chemie», Band 26, Jahr 1958, Seiten 96 bis 101, Verlag Dr. Alfred Hüthig, Heidelberg, Deutschland). Entscheidend ist der Gehalt an Chlor. Er beträgt 20 bis 50 Gew.-%, vorzugsweise 30 bis 42 Gew.-%, bezogen auf das chlorierte Polyethylen.

Die erfindungsgemäß einzusetzenden chlorierten Ethylenpolymerisate lassen sich nach den verschiedenen bekannten Verfahren herstellen, beispielsweise durch Chlorierung in homogener Phase, das heißt in Lösung, sowie durch Chlorierung in heterogener Phase, vorzugsweise in wäßriger Suspension oder in der Gasphase, zum Beispiel in der Wirbelschicht. Die Chlorierung wird dabei vorzugsweise so durchgeführt, daß möglichst homogen chlorierte Produkte entstehen, die im wesentlichen keine unchlorierten Polyolefinmoleküle mehr enthalten (in denen also möglichst jedes Polyolefinmolekül mindestens ein Chloratom enthält) und im Röntgenspektrum eine Restkristallinität von höchstens 5 Gew.-%, vorzugsweise höchstens 3 Gew.-%, aufweisen.

Die Menge an chloriertem Ethylenpolymerisat in der erfindungsgemäßen Folie beträgt 3 bis 15, vorzugsweise 7 bis 13 Gew.-%, bezogen auf das Gewicht der Folie.

Das zusätzlich einzusetzende Methylmethacrylat-Butadien-Styrol-Copolymersiat enthält vorzugsweise 20 bis 30 Gew.-% Methylmethacrylat-Einheiten, 35 bis 50 Gew.-% Butadien-Einheiten und 30 bis 40 Gew.-% Styrol-Einheiten statistisch verteilt. Es läßt sich durch übliche Polymerisation herstellen. Sein Anteil in der Folie beträgt 1 bis 8, insbesondere 3 bis 7 Gew.-%.

Das zusätzlich einzusetzende Polymethylmethacrylat ist ein Polymersiat des Esters aus Methacrylsäure und Methanol (Methylmethacrylat). Das Molekulargwicht des Polymethylmethacrylats kann in weiten Grenzen variieren. Bevorzugt sind Polymethylmethacrylate mit einer relativen Viskosität von 1,2 bis 20, vorzugsweise 4 bis 15 (gemessen in einer 1 gew.-%igen Lösung in Chloroform mittels des Ubbelohde-Viskosimeters mit Kapillare Oa).

Die erfindungsgemäß einzusetzenden Polymethylmethacrylate lassen sich nach den verschiedenen bekannten Verfahren herstellen, beispielsweise durch die übliche Polymerisation von Methylmethacrylat in wäßriger Emulsion.

Die Menge an Polymethylmethacrylat in der erfindungsgemäßen Folie beträgt 0,5 bis 3 Gew.-%, bezogen auf das Gewicht der Folie.

Die erfindungsgemäß einzusetzenden Weichmacher sind mit Vinylchloridpolymerisaten verträglich. Zu diesen Weichmachern, die auch in solchen Mengen, die über den erfindungsgemäß zu verwendenden liegen, mit Polyvinylchlorid verträglich sind und aus den hergestellten Folien nicht ausschwitzen, zählen bekanntlich die Primär- und die Sekundärweichmacher für Polyvinylchlorid (vgl. Zeitschrift «Kunststoff-Rundschau», Heft 6, Jahr 1972, Seiten 251 bis 260 und Zeitschrift «Kunststoffe», Jahr 1976, Seiten 674 und 679). Im Sinne der Erfindung kommen somit grundsätzlich die für Vinylchloridpolymerisate bekannten Primär- und Sekundärweichmacher in Betracht, wie sie beispielsweise in den zitierten Zeitschriften oder in der Monographie «Polyvinylchlorid und Vinylchlorid-Mischpolymerisate» von Helmut Kainer, Springer-Verlag, Berlin, Heidelberg, New York, Jahr 1965, Seiten 259 bis 319, angeführt sind.

Die bei den erfindungsgemäßen Folien in Betracht kommenden Weichmacher sind also durch die angegebene Eigenschaft «mit Vinylchloridpolymerisaten verträglich» klar und eindeutig gekennzeichnet.

Aus der großen Zahl der in Betracht kommenden Weichmacher werden zweckmäßigerweise solche aus der Gruppe der Phosphorsäureester, Phthalsäureester, Di- und Tricarbonsäureester, Fettsäureester, Sulfonsäureester und der epoxidierten Öle eingesetzt, wobei letztere ganz bevorzugt sind. Ein besonders geeigneter Weichmacher ist epoxidiertes Sojabohnenöl.

Die Menge an Weichmacher in der erfindungsgemäßen Folie beträgt vorzugsweise 3 bis 6 Gew.-%, bezogen auf das Gewicht der Folie und ist damit weit niedriger als die übliche Menge, die bei PVC-Folien bei 10 bis 20 Gew.-% liegt.

Die erfindungsgemäßen Folien aus den beschriebenen Komponenten enthalten zweckmäßigerweise auch noch die für die Verarbeitung von Vinylchloridpolymerisaten bekannten Hilfsstoffe, vorzugsweise Wärmestabilisatoren und Gleitmittel. Sie können auch noch besondere Additive wie Farbstoffe und antistatisch wirkende Substanzen und dergleichen enthalten.

Als Wärmestabilisatoren werden zweckmäßigerweise eingesetzt Mono- und Dialkyl-Zinnverbindungen mit 1 bis 10 C-Atomen im Alkylrest, bei denen die restlichen Wertigkeiten des Zinns über Sauerstoff und oder Schwefelatome mit weiteren Substituenten verbunden sind. Bevorzugt verwendet werden die Organozinnsauerstoff-Stabilisatoren, beispielsweise Di-n-butylzinn-maleat und Di-n-butylzinn-laurat.

Die Stabilisatoren werden in einer Menge von 0,5 bis 3,0 Gew.-%, vorzugsweise 0,8 bis 2,0 Gew.-%, bezogen auf das Gewicht der Folie, eingesetzt. Zusätzlich zu den Stabilisatoren können auch noch übliche Costabilisatoren und oder Antioxidanten eingesetzt werden, beispielsweise alkylsubstituierte, aromatische Hydoxyverbindungen wie Di-tert.-butylparakresol, Dibuthylhydroxynaphthalin oder tert.-Butylhydroxyanisol, und Organophosphorigsäureester wie Tris-(mono- oder di-)nonylphenylphosphite. Die wirksame Menge an Costabilisatoren und Antioxidanten liegt im allgemeinen bei jeweils 0,05 bis 2,0 Gew.-%, bezogen auf das Gewicht der Folie.

Als Gleitmittel weden zweckmäßigerweise die folgenden Verbindungen eingesetzt. Höhere aliphatische Carbonsäuren oder Oxycarbonsäuren, deren Alkali- oder Erdalkalisalze, deren Ester oder deren Amide, beispielsweise Stearinsäure, Montansäure, Glycerinmonooleat, Bis-stearyl- oder Bis-palmitoyl-ethylendiamin, Montansäureester von Ethandiol oder 1,3-Butandiol, gegebenenfalls teilweise verseift, Fettalkohole mit mehr als 10 C-Atomen und deren Alkylether und Hartparaffine. Vorteilhafte Gleitmittel sind Wachs OP, ein 1,3-Butandiolmontansäureester gekälkt, so daß etwa 40 Gew.-% der zur Kälkung eingesetzten Montansäure als Calciumsalz vorliegen, Wachs E, ein 1,3-Butandiolmontansäureester, Stearinsäure und Bis-stearylethylendiamin. Der Anteil an Gleitmittel in der Folie beträgt 0,1 bis 2,5 Gew.-%, vorzugsweise 0,5 bis 1,5 Gew.-%, bezogen auf das Gewicht der Folie.

Als Additive mit antistatischer Wirkung können beispielsweise die bei Vinylchloridpolymerisaten üblichen quaternären Ammoniumsalze in einer Menge von etwa 0,05 bis 1,0 Gew.-%, bezogen auf das Gewicht der Formmasse, eingesetzt werden.

Die Herstellung der erfindungsgemäßen Folie erfolgt durch Zusammenmischen der einzelnen Komponenten in einer üblichen Mischvorrichtung, beispielsweise in einem Schnellmischer, und Verarbeitung der Mischung auf einem Extruder oder Kalander bei Arbeitstemperaturen von 80 bis 250°C, vorzugsweise von 190 bis 230°C, zu einer Folie, wobei die Dicke der erhaltenen Folie in der Regel 50 bis 2000 µm, vorzugsweise 400 bis 1400 µm, beträgt. Die Kalandrierung der zweckmäßigerweise in einem Kneter oder einem Walzwerk vorgelierten Mischung erfolgt vorzugsweise auf einem 4- oder 5-Walzenkalander nach dem Hochtemperaturverfahren, wobei die Walzen im allgemeinen auf eine Temperatur von 190 bis 230°C erhitzt sind. Die kalandrierte Folie wird von der letzten Kalanderwalze abgezogen, mit Hilfe von Kühlwalzen abgekühlt und in der Regel einer Aufwickeleinrichtung zugeführt.

Die zur Herstellung der Folie vorgesehene Formmasse zeichnet sich durch ihre leichte Verarbeitbarkeit, vorzugsweise beim Kalandrieren aus. Sie läßt sich beispielsweise ohne Schwierigkeiten auch mit relativ hoher Geschwindigkeit kalandrieren. Ihre Schmelzviskosität liegt in einem insbesondere für die Kalandrierung sehr günstigen Bereich.

Die erfindungsgemäße Folie besitzt hohe Schlagzähigkeit, Witterungsbeständigkeit, insbesondere UV-Stabilität und nur geringes Rückstellvermögen.

Bei der erfindungsgemäßen Verwendung der Folie können vorteilhafterweise die zur Herstellung spiralgefalzter Rohre aus Metall bekannten Vorrichtungen benutzt werden. Zu diesen Anlagen gehören Maschinen, bei denen das Band um einen festen Dorn gewickelt wird, dessen Durchmesser den Innendurchmesser des Rohres bestimmt. Es sind aber auch Wickeleinrichtungen bekannt, bei denen der Rohrdurchmesser durch äußere einstellbare Elemente festgelegt werden kann.

Die Folie wird gewöhnlich mit einem Vorschubwalzenpaar zugeführt und seitlich mit Führungsschienen gehalten, die sich auf die verwendete Bandbreite einstellen lassen. Der Falzformer besteht üblicherweise aus zwei Formrollensätzen, die dem Einlaufwinkel des Rohrdurchmessers angepaßt werden können. Die beiden Formrollensätze biegen jeweils den Rand der Folie um und bilden den Falz. Die Falze benachbarter Folienränder der spiralig geführten Folie werden in Eingriff miteinander gebracht und mit Falzschließroller aufeinander gepreßt.

In Abwandlung zu dem bisherigen Verfahren werden die Folienränder kurz vor dem Falzformer über eine Breite von etwa 1 bis 2 cm, zweckmäßigeweise auf etwa 90 bis 100°C, erwärmt. Diese Aufheizung gewährleistet, daß die gefalzte Folie praktisch überhaupt keine Rückstellung mehr zeigt. Außerdem ist es vorteilhaft, die Folie auch beim Durchlaufen des Falzschließrollers, vorzugsweise auf etwa 70 bis 90°C Oberflächentemperatur, zu erwärmen. Zur Aufheizung werden beispielsweise Heizstrahler oder ein Heißluftgebläse verwendet.

Zum Verbinden der Folienränder wird in die Nahtzone ein Klebstoff, z. B. ein luft- und wasserdichter Schmelzkleber eingebracht oder man verschweißt die Folienränder mit einem für Polyvinylchlorid üblichen Lösungsmittelkleber wie Tetrahydrofuran. Die Bandbreite der verwendeten Folie beträgt im allgemeinen je nach Durchmesser des Rohres, der bei 8 bis 160 cm liegen kann, 8 bis 20 cm. In entsprechender Weise läßt sich die Foliendicke auswählen, die 0,05 bis 2, insbesondere 0,4 bis 1,4 mm beträgt.

Die aus der Folie hergestellten, spiralgefalzten Rohre zeichnen sich durch hohe Beständigkeit gegenüber der Einwirkung von Chemikalien und Witterungseinflüssen aus. Sie sind aufgrund ihres geringen Gewichts leicht zu handhaben und auch einfach zu verarbeiten. Im Verhältnis zu ihrem geringen Gewicht zeigen sie hohe Steifheit und Festigkeit.

Die Herstellung kann unmittelbar am Einsatzort erfolgen, so daß die Möglichkeit besteht, große Rohrlängen aus einem Stück anzufertigen. Damit wird die Zahl der Kupplungsstücke verringert. Es lassen sich Rohre beliebigen Durchmessers und Länge herstellen.

Als Anwendungsmöglichkeit für diese Rohre sind zu nennen: Lüftungsrohre in Klimaanlagen, in industriellen und landwirtschaftlichen Abluftanlagen, Säulenverschalung und verlorene Verschalung, Isoliermantel, Verkleidung der Innenseite von Abwasserrohren, Bewässerungs-, Entwässerungs- und Irrigationsrohre, Verwendung als Baumwurzelschutz und zur Herstellung von zylindrischen Behältern wie z.B. Fässern.

Die Erfindung wird durch die folgenden Beispiele näher erläutert.

Erfindungsgemäße Beispiele:
Beispiel 1:
61,7 Gew.% PVC-Hompolymerisat (K-Wert 60)
12,3 Gew.-% chloriertes Polyethylen (Chlorgehalt: 34 Gew.-%)
12,3 Gew.-% Calciumcarbonat
3,1 Gew.-% Weichmacher (epoxidiertes Öl)
1,2 Gew.-% Wärmestabilisator (zinnorganische Verbindung)
0,8 Gew.-% Gleitmittel
6,2 Gew.-% Methylmethacrylat-Butadien-Styrol-Copolymerisat
1,2 Gew.-% Titandioxyd
1,2 Gew.-% Polymethylmethacrylat
Beispiel 2:
63,7 Gew.-% PVC-Homopolymerisat (K-Wert 60)
12,3 Gew.-% chloriertes Polyethylen (Chlorgehalt: 34 Gew.-%)
9,6 Gew.-% Calciumcarbonat
3,1 Gew.-% Weichmacher (epoxidiertes Öl)
1,3 Gew.-% Wärmestabilisator (zinnorganische Verbindung)
0,6 Gew.-% Gleitmittel
6,4 Gew.-% Methylmethacrylat-Butadien-Styrol-Copolymerisat
1,3 Gew.-% Titandioxyd
1,3 Gew.-% Polymethylmethacrylat
Vergleichsbeispiele
Beispiel 3:
68,0 Gew.-% PVC-Homopolymerisat (K-Wert 60)
13,6 Gew.-% chloriertes Polyethylen (Chlorgehalt: 34 Gew.-%)
3,5 Gew.-% Calciumcarbonat
3,4 Gew.-% Weichmacher (epoxidiertes Öl)
1,3 Gew.-% Wärmestabilisator (zinnorganische Verbindung)
0,8 Gew.-% Gleitmittel
6,8 Gew.-% Methylmethacrylat-Butadien-Styrol-Copolymerisat
1,3 Gew.-% Titandioxyd
1,3 Gew.-% Polymethylmethacrylat

Beispiel 4:
82,0 Gew.-% PVC-Homopolymerisat (K-Wert 60)
4,1 Gew.-% Weichmacher (epoxidiertes Öl)
1,6 Gew.-% Wärmestabilisator (zinnorganische Verbindung)
0,9 Gew.-% Gleitmittel
8,2 Gew.-% Methylmethacrylat-Butadien-Styrol-Copolymerisat
1,6 Gew.-% Titandioxyd
1,6 Gew.-% Polymethylmethacrylat

Die in den Beispielen aufgeführten Komponenten wurden in einem üblichen Schnellmischer gemischt, in einem Kneter bei einer Temperatur von etwa 140 °C vorgeliert und auf einem 5-Walzenkalander, dessen Walzen (in Folienaufrichtung) auf 210 °C bis 230 °C erhitzt sind, zu Folien gleicher Dicke (jeweils 1 mm) verarbeitet.

An den Folien wurde gemessen: die Streckgrenze und die Dehnung in der Streckgrenze nach DIN 53455, der E-Modul und der Rückstellwinkel β, den die Folie behält nach Umbiegen eines Folienrandes um 180° und Aufhebung der Preßkraft (Knicktest) und die Schlagzugdehnung in der Längs- und Querrichtung der Folienproben nach DIN 53448.

In der nachstehenden Tabelle sind die Meßergebnisse bei den Folien aus den Beispielen zusammengefaßt. Sie beweisen die oben aufgeführten unerwartet vorteilhaften Eigenschaften der erfindungsgemäßen Folie.

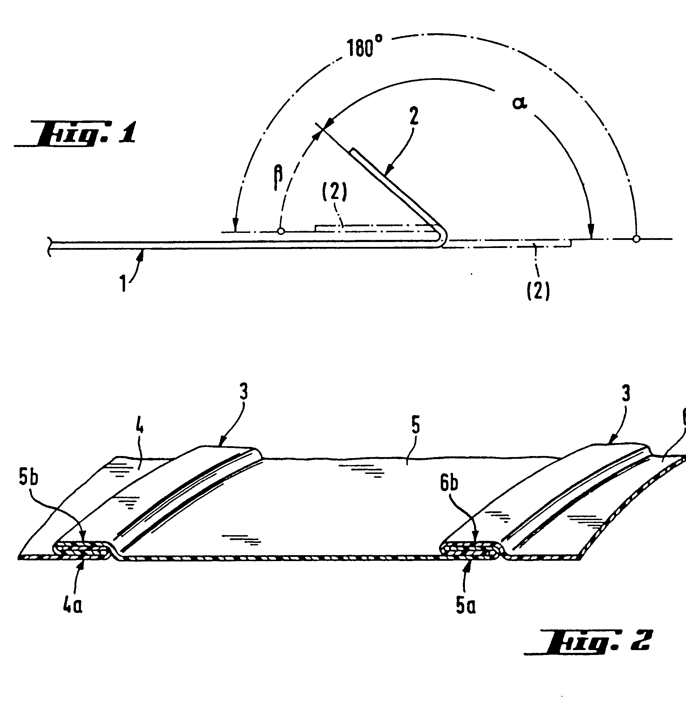

Die Figuren 1 und 2 dienen der weiteren Erläuterung der Erfindung.

In Fig. 1 wird der erreichte Knickwinkel α nach dem Knicktest erläutert. Die Folie 1 wurde mit ihrem Rand 2 um 180° umgeknickt und hat sich nach Aufhebung der Preßkraft in Richtung zu ihrer ursprünglichen Lage um den Rückstellwinkel β zurückgestellt.

In Fig. 2 ist ausschnittsweise ein spiralgefalztes Rohr in Seitenansicht dargestellt. Es erläutert die Struktur der Verbindungsnaht 3. Mit 4, 5 und 6 sind versetzte Teile der spiralförmig gewickelten Folie bezeichnet, die mit ihren gefalzten Rändern 4a, 5a, 5b und 6b miteinander verhakt sind.

| Beispiel | | 1 | | 2 | | 3 | | 4 | |
|---|---|---|---|---|---|---|---|---|---|
| Streckgrenze | N/mm² | 37 | | 35 | | 39 | | 54 | |
| Dehnung in der Streckgrenze | % | 4 | | 4,5 | | 5 | | 5 | |
| E-Modul | N/mm² | 1800 | | 1700 | | 1575 | | 2700 | |
| Knickwinkel α nach Knicktest der Folie über 180° | Grad | 145 | | 130 | | 118 | | 115 | |
| Schlagzugdehnung | % | 1 | q | 1 | q | 1 | q | 1 | q |
| − 20 °C | | 28 | 25 | 23 | 22 | 13 | 14 | 10 | 8 |
| 0 °C | | 19 | 25 | 22 | 26 | 45 | 39 | 17 | 14 |
| 23 °C | | 52 | 38 | 55 | 42 | 81 | 54 | 26 | 25 |

## Patentansprüche

1. Folie auf Basis von Vinylchloridpolymerisat und Additiven, dadurch gekennzeichnet, daß die Folie eine Additivkombination enthält, bestehend aus

a) 3 bis 15, vorzugsweise 7 bis 13 Gew.-%, bezogen auf das Foliengewicht, chloriertes Polyethylen mit einem Chlorgehalt von 20 bis 50 Gew.-%, bezogen auf das chlorierte Polyethylen,

b) 8 bis 40, vorzugsweise 10 bis 25 Gew.-%, bezogen auf das Foliengewicht, anorganische Teilchen auf Basis eines Carbonats, Sulfats oder Silikats,

c) 1 bis 8, vorzugsweise 3 bis 7 Gew.-%, bezogen auf das Foliengewicht, Methylmethacrylat-Butadien-Styrol-Copolymerisat,

d) 0,5 bis 3 Gew.-%, bezogen auf das Foliengewicht, Polymethylmethacrylat sowie

e) 3 bis 6 Gew.-%, bezogen auf das Foliengewicht, von einem mit Vinylchloridpolymerisaten verträglichen Weichmacher.

2. Folie nach Anspruch 1, dadurch gekennzeichnet, daß die anorganischen Teilchen aus Bariumsulfat, Talkum, Kaolin oder vorzugsweise aus Calciumcarbonat bestehen.

3. Folie nach Anspruch 2, dadurch gekennzeichnet, daß die anorganischen Teilchen aus einer Mischung aus 10 bis 20 Gew.-% Calciumcarbonat- und 0,5 bis 2 Gew.-% Titandioxid-Teilchen bestehen, jeweils bezogen auf das Foliengewicht.

4. Folie nach einem der Ansprüche 1 bis 3, dadurch gekennzeichnet, daß sie 3 bis 6 Gew.-%, bezogen auf das Foliengewicht, Weichmacher auf Basis von expodiertem Öl enthält.

5. Folie nach einem der Ansprüche 1 bis 4, dadurch gekennzeichnet, daß sie 0,5 bis 3,0 Gew.-% eines Wärmestabilisators auf Basis zinnorganischer Verbindungen enthält.

6. Verwendung der Folie nach einem der vorhergehenden Ansprüche bei der Herstellung steifer rohrförmiger Körper, wobei die Folie spiralförmig gewickelt, ihre Ränder umgebogen und im Überlappungsbereich miteinander verhakt und verklebt bzw. verschweißt sind.

7. Verwendung nach Anspruch 6, dadurch gekennzeichnet, daß die Folie eine Bandbreite von 8 bis 20 cm und eine Dicke von 0,05 bis 2 mm aufweist und der erhaltene rohrförmige Körper einen Durchmesser von 8 bis 160 cm zeigt.

8. Verwendung nach Anspruch 6 oder 7, dadurch gekennzeichnet, daß die Folie vor dem Falzen der Ränder und gegebenenfalls auch beim Verhaken ihrer umgebogenen Ränder im Bereich der Folienränder erwärmt wird.

9. Verwendung nach einem der Ansprüche 6 bis 8, dadurch gekennzeichnet, daß die Folienränder durch Einwirkung eines Lösungsmittelklebers verschweißt werden.

## Claims

1. Film based on a vinyl chloride polymer and additives, wherein the film contains a combination of additives comprising

a) from 3 to 15% by weight, preferably from 7 to 13% by weight, relative to the weight of the film, of a chlorinated polyethylene having a chlorine content from 20 to 50% by weight, relative to the chlorinated polyethylene,

b) from 8 to 40% by weight, preferably from 10 to 25% by weight, relative to the weight of the film, of inorganic particles based on a carbonate, a sulfate or a silicate,

c) from 1 to 8% by weight, preferably from 3 to 7% by weight, relative to the weight of the film, of a methyl methacrylate/butadiene/styrene copolymer,

d) from 0.5 to 3% by weight, relative to the weight of the film, of a polymethyl methacrylate, and

e) from 3 to 6% by weight, relative to the weight of the film, of a plasticizer which is compatible with vinyl chloride polymers.

2. A film as claimed in claim 1, wherein the inorganic particles comprise barium sulfate, talcum, kaolin or preferably calcium carbonate.

3. A film as claimed in claim 2, wherein the inorganic particles comprise a mixture of 10 to 20% by weight of calcium carbonate particles and 0.5 to 2% by weight of titanium dioxide particles, in each case relative to the weight of the film.

4. A film as claimed in any of claims 1 to 3, which contains from 3 to 6% by weight, relative to the weight of the film, of a plasticizer based on an epoxidated oil.

5. A film as claimed in any of claims 1 to 4, which contains from 0.5 to 3.0% by weight of a heat stabilizer based in organo-tin compounds.

6. Use of the film as claimed in any of the preceding claims in the manufacture of rigid tubular bodies, the film being helically wound, its edges folded and hooked into one another and glued or welded in the region of the overlap.

7. Use as claimed in claim 6, wherein the film has a web width of 8 to 20 cm and a thickness of 0.05 to 2 mm and the tubular body obtained has a diameter of 8 to 160 cm.

8. Use as claimed in claim 6 or claim 7, wherein the film is heated in the region of the film edges prior to folding the edges and optionally also when hooking the folded edges into one another.

9. Use as claimed in any of claims 6 to 8, wherein the film edges ared welded by the action of a solventbased adhesive.

## Revendications

1. Feuille à base du polymère du chlorure de vinyle et d'additifs, caractérisée en ce que la feuille contient une association d'additifs constituée de

a) 3 à 15, de préférence 7 à 13% en poids, par rapport au poids de la feuille, d'un polyéthylène chloré ayant une teneur en chlore de 20 à 50% en poids par rapport au polyéthylène chloré,

b) 8 à 40, de préférence 10 à 25% en poids, par rapport au poids de la feuille, de particules minérales à base d'un carbonate, d'un sulfate ou d'un silicate,

c) 1 à 8, de préférence 3 à 7% en poids, par rapport au poids de la feuille, d'un copolymère méthacrylate de méthyle-butadiène-styrène,

d) 0,5 à 3% en poids, par rapport au poids de la feuille, de polyméthacrylate de méthyle ainsi que

e) 3 à 6% en poids, par rapport au poids de la feuille, d'un plastifiant compatible avec les polymères du chlorure de vinyle.

2. Feuille suivant la revendication 1, caractérisée en ce que les particules minérales se composent de sulfate de baryum, de talc, de kaolin ou de préférence de carbonate de calcium.

3. Feuille suivant la revendication 2, caractérisée en ce que les particules minérales se composent d'un mélange de 10 à 20% en poids de particules de carbonate de calcium et de 0,5 à 2% en poids de particules de dioxyde de titane, par rapport à chaque fois au poids de la feuille.

4. Feuille suivant l'une des revendications 1 à 3, caractérisée en ce qu'elle contient 3 à 6% en poids, par rapport au poids de la feuille, de plastifiant à base d'huile époxydée.

5. Feuille suivant l'une des revendications 1 à 4, caractérisée en ce qu'elle contient 0,5 à 3,0% en poids d'un stabilisant thermique à base de composés organiques de l'étain.

6. Utilisation de la feuille suivant l'une des revendications précédentes dans la fabrication de corps tubulaires rigides, la feuille étant entroulée en spirale, ses bords étant recourbés et accrochés les uns aux autres dans le domaine de recouvrement et collés ou soudés.

7. Utilisation suivant la revendication 6, caractérisée en ce que la feuille présente une largeur de bande de 8 à 20 cm et une épaisseur de 0,05 à 2 mm, et en ce que le corps tubulaire obtenu présente un diamètre de 8 à 160 cm.

8. Utilisation suivant les revendications 6 ou 7, caractérisée en ce que la feuille est chauffée avant le pliage des bords, et le cas échéant aussi, lors de l'accrochage de ses bords recourbés dans le domaine des bords de la feuille.

9. Utilisation suivant l'une des revendications 6 à 8, caractérisée en ce que les bords de la feuille sont soudés par action d'une colle à base de solvant.

_Fig. 1_

_Fig. 2_